# EUROPÄISCHE PATENTSCHRIFT

(11) **EP 3 421 784 B1**
(45) Veröffentlichungstag und Bekanntmachung des Hinweises auf die Patenterteilung: **03.08.2022**
(21) Anmeldenummer: 18180694.4
(22) Anmeldetag: 29.06.2018
(51) Int. Cl.: F03D 7/02, F03D 80/40

(54) **VERFAHREN ZUM BETREIBEN EINER WINDENERGIEANLAGE**
METHOD FOR OPERATING A WIND FARM
PROCÉDÉ DE FONCTIONNEMENT D'UNE ÉOLIENNE

(30) Priorität: 30.06.2017 DE 102017006191
(43) Veröffentlichungstag der Anmeldung: 02.01.2019
(73) Patentinhaber: Siemens Gamesa Renewable Energy Service GmbH, 20097 Hamburg (DE)
(72) Erfinder: Bilges, Sören, 22761 Hamburg (DE)
(74) Vertreter: Glawe, Delfs, Moll

(56) Entgegenhaltungen:
- EP-A1- 2 559 894
- EP-A1- 2 719 895

## Beschreibung

Die Erfindung betrifft ein Verfahren zum Betreiben einer Windenergieanlage, sowie eine zur Ausführung dieses Verfahrens ausgebildete Windenergieanlage und ein entsprechendes Computerprogrammprodukt.

Windenergieanlagen sind aus dem Stand der Technik bekannt. Sie umfassen in der Regel einen Rotor, der drehbar an einer Gondel angeordnet ist, wobei die Gondel wiederum drehbar auf einem Turm angeordnet ist. Der Rotor treibt ggf. über eine Rotorwelle und ein Getriebe einen Generator an. Eine durch Wind induzierte Rotationsbewegung des Rotors kann so in elektrische Energie gewandelt werden, die dann über Umrichter und/oder Transformatoren - je nach Bauart des Generators auch wenigstens teilweise direkt - in ein elektrisches Netz eingespeist werden kann. Der Rotor umfasst mehrere (in der Regel drei), sich im Wesentlichen radial von der Rotorachse erstreckende Rotorblätter, die gegenüber einer Rotornabe drehbar befestigt sind, um den Anstellwinkel der Rotorblätter einzustellen.

Die Rotorblätter der Windenergieanlagen sind häufig hinsichtlich ihres Blattwinkels verstellbar (Pitch-Verstellung), wodurch sich auch der Anstellwinkel der einzelnen Rotorblätter während des Betriebs verändern lässt. In einem Teillastbereich zwischen Einschaltwindgeschwindigkeit, ab welcher der Rotor beginnen kann sich zu drehen, und Nennwindgeschwindigkeit, ab der die Windenergieanlage ihre Nennleistung ins elektrische Netz einspeist, wird der Blattwinkel so gewählt, dass einerseits die Windausbeute möglichst maximal ist, andererseits ein Strömungsabriss an einem oder mehreren Rotorblättern sicher vermieden wird. In dem Volllastbereich mit einer Windgeschwindigkeit jenseits der Nennwindgeschwindigkeit werden die Blattwinkel so eingestellt, dass sich der Rotor nur mit der vorgegebenen Maximalgeschwindigkeit dreht.

Die Steuerung der Blattwinkel erfolgt im Teillastbereich regelmäßig anhand einer Kennlinie in Abhängigkeit der dimensionslosen sog. Schnelllaufzahl λ, die sich aus dem Quotienten von Geschwindigkeit der Rotorblattspitzen und der Windgeschwindigkeit ergibt. Die Kennlinie ist so gewählt, dass bei deren Einhaltung im Teillastbereich der optimale Leistungsbeiwert des Rotors bzw. der Rotorblätter erreicht wird, was wiederum eine optimale Windausbeute bedeutet. Im Volllastbereich wird hingegen ein von dieser Kennlinie abweichender Blattwinkel eingestellt, wodurch sich der Leistungsbeiwert des Rotors reduziert.

Je nach Aufstellort einer Windenergieanlage besteht die Gefahr, dass sich an den Rotorblättern Eis ansetzt, welches die Umströmungseigenschaften der Rotorblätter ändert. Insbesondere steigt - bei gleichbleibender Steuerung - das Risiko von Strömungsabrissen. Ein solcher Strömungsabriss bedeutet einen plötzlichen Abfall in der Energieerzeugung und in der Folge eine erhebliche mechanische Belastung für die Windenergieanlage. Auch wirkt sich eine solche plötzlicher Abfall der eingespeisten Energie negativ auf die Stabilität des elektrischen Netzes aus. Ein Strömungsabriss ist daher möglichst zu vermeiden.

Das US-Patent US 8,096,761 B1 hat erkannt, dass in Fällen verschlechterter Aerodynamik der Rotorblätter - bspw. durch Eisansatz - eine zur Steuerung der Blattwinkel im Teillastbereich verwendeten Kennlinie vergleichbare (wenn nicht gar identische) Linie ermitteln lässt, die für die unterschiedlichen Betriebszustände jeweils einen Minimalblattwinkel angibt, bei dessen Unterschreitung ein erhöhtes Risiko eines Strömungsabrisses besteht. In der Folge ist die Windenergieanlagensteuerung so ausgelegt, dass bei verschlechterter Aerodynamik der Rotorblätter der für den jeweiligen Betriebszustand bestehende Minimalblattwinkel nicht unterschritten wird.

Nachteilig an diesem Stand der Technik ist, dass bei verschlechterter Aerodynamik zwar ein Strömungsabriss an den Rotorblättern vermieden werden kann, die Windenergieanlage aufgrund des festgelegten, nicht zu unterschreitenden Minimalblattwinkels aber ggf. nicht den maximal-möglichen Anlagenertrag liefert. Insbesondere bei Anlagen an Aufstellorten, bei denen über einen längeren Zeitraum mit Eisansatz an den Rotorblättern zu rechnen ist, kann der Ertragsverlust durch Einhalten eines Minimalblattwinkels, der lediglich auf die sichere Vermeidung von Strömungsabrissen gerichtet ist, erheblich sein.

Ein weiteres Dokument aus dem Stand der Technik ist EP 2 719 895 A1.

Aufgabe der vorliegenden Erfindung ist es, ein Verfahren zum Betrieb einer Windenergieanlage, sowie eine Windenergieanlage und ein Computerprogrammprodukt zu schaffen, bei dem die Nachteile des Standes der Technik nicht mehr oder zumindest nur noch im verminderten Umfang auftreten.

Gelöst wird diese Aufgabe durch ein Verfahren gemäß dem Hauptanspruch, sowie eine Windenergieanlage und ein Computerprogrammprodukt gemäß den nebengeordneten Ansprüchen. Vorteilhafte Weiterbildungen sind Gegenstand der abhängigen Ansprüche.

Demnach betrifft die Erfindung ein Verfahren zum Betrieb einer Windenergieanlage umfassend einen Rotor mit mehreren, hinsichtlich des Blattwinkels einstellbaren Rotorblättern und einer Erkennung für Eisansatz an den Rotorblättern, wobei die Blattwinkeleinstellung im Normalbetrieb anhand einer Standard-Kennlinie in Abhängigkeit einer während des Betriebs der Windenergieanlage ermittelbaren Kennzahl und im Falle von erkanntem Eisansatz gemäß den folgenden Schritten erfolgt:
a) Betrieb der Windenergieanlage anhand einer initialen Sonder-Kennlinie für die Blattwinkel eines Rotorblatts oder aller Rotorblätter in Abhängigkeit einer während des Betriebs der Windenergieanlage ermittelbaren Kennzahl;
b) Aufzeichnung einer ersten Leistungskurve für einen vorgegebenen Zeitraum;
c) Veränderung der Sonder-Kennlinie;
d) Aufzeichnung einer weiteren Leistungskurve für einen vorgegebenen Zeitraum; und
e) Überprüfung, ob die zuletzt ermittelte weitere Leistungskurve ein Optimum darstellt:
   - wenn ja, Betrieb der Windenergieanlage anhand der optimalen Sonder-Kennlinie (also je nach Definition der Sonder-Kennlinie in Schritt (a) entweder für das eine Rotorblatt oder alle Rotorblätter), welche der zuletzt ermittelten weiteren Leistungskurve zugrunde liegt;
   - wenn nein, Iteration ab Schritt c),
wobei nach Ermittlung der optimalen Sonder-Kennlinie für ein Rotorblatt die Schritte a) bis e) nacheinander für die weiteren Rotorblätter wiederholt werden.

Weiterhin betrifft die Erfindung eine Windenergieanlage umfassend einen Rotor mit mehreren, hinsichtlich des Blattwinkels einstellbaren Rotorblättern, der drehbar an einer drehbar auf einem Turm angeordneten Gondel angeordnet und mit einem in der Gondel angeordneten Generator zur Umwandlung von auf den Rotor einwirkenden Windenergie in elektrische Energie verbunden ist, und einer Steuerungseinrichtung zur Steuerung der Windenergieanlage und deren Komponenten, wobei die Steuerungseinrichtung zur Durchführung des erfindungsgemäßen Verfahrens ausgebildet ist.

Auch betrifft die Erfindung ein Computerprogrammprodukt umfassend Programmteile, welche, wenn geladen in einem Computer, zur Durchführung des erfindungsgemäßen Verfahrens ausgelegt sind.

Zunächst werden einige im Zusammenhang mit der Erfindung verwendete Begriffe erläutert.

Der Begriff "Leistungskurve" bezeichnet den quantitativen Zusammenhang zwischen Windgeschwindigkeit und erzeugter elektrischer Leistung.

Zur "Aufzeichnung einer Leistungskurve" werden erfasste Werte für Windgeschwindigkeit und erzeugter elektrischer Leistung paarweise zu Datenpunkten zusammengeführt. Erfolgt die Aufzeichnung über eine ausreichend langen Zeitraum mit sich verändernden Windgeschwindigkeiten, ergibt sich aus den einzelnen Datenpunkten eine Leistungskurve. Es ist aber auch möglich, dass lediglich eine kleine Zahl von Datenpunkten erfasst wird, aus denen dann bei Bedarf eine Leistungskurve extrapoliert werden kann. Im Extremfall - insbesondere bei über einen längeren Zeitraum gleichbleibendem Wind - ist es auch möglich, das für die Aufzeichnung einer Leistungskurve nur ein einziger Datenpunkt erfasst wird, von dem aus - sofern erforderlich - eine theoretische Leistungskurve näherungsweise bestimmt werden kann.

Die Erfindung hat erkannt, dass im Falle von Eisansatz an den Rotorblättern einer Windenergieanlage und der damit regelmäßig einhergehenden Verschlechterung der Aerodynamik der Rotorblätter zwar die Blattwinkelregelung verändert werden muss, um Strömungsabrisse zu vermeiden, die Veränderung der Blattwinkelregelung aber iterativ optimiert werden kann, um den Ertragsverlust aufgrund von Eisansatz möglichst gering zu halten. Dies gilt insbesondere, da festgestellt wurde, dass sich bei Eisansatz an den Rotorblättern jeweils völlig unterschiedliche Eisformationen ausbilden, welche die Aerodynamik der Rotorblätter entsprechend individuell verändern. Eine grundsätzliche statische Veränderung der Blattwinkelregelung, wie sie letztendlich auch durch die Vorgabe eines Minimalblattwinkels erfolgt, ist im Hinblick auf den Ertrag einer Windenergieanlage daher nachteilig. Das erfindungsgemäße Verfahren ist insbesondere für solche Windenergieanlagen relevant, bei denen dauerhafter Eisansatz über einen längeren Zeitraum zu erwarten ist, bspw. Anlagen in Gebieten mit über mehreren Monaten hinweg niedrigen oder negativen Temperaturen.

Erfindungsgemäß ist vorgesehen, dass eine Windenergieanlage, deren Blattwinkeleinstellung im Normalbetrieb anhand einer Standard-Kennlinie in Abhängigkeit eines während des Betriebs der Windenergieanlage ermittelbaren Kennzahl vorgenommen wird, bei Feststellung von Eisansatz zunächst anhand einer vorgegebenen initialen Sonder-Kennlinie betrieben wird, wobei diese Sonder-Kennlinie jedoch im weiteren Verlauf des Verfahrens iterativ angepasst wird, um trotz des Eisansatzes dennoch einen möglichst maximalen Ertrag zu erreichen. Die initiale Sonder-Kennlinie weicht in der Regel von der Standard-Kennlinie ab.

Zur Erkennung eines Eisansatzes an den Rotorblättern sind im Stand der Technik verschiedene Methoden bekannt. Beispielsweise kann die Erkennung von Eisansatz durch Feststellung eines Leistungsdefizits der Windenergieanlage gegenüber einer Referenzleistungskurve in Abhängigkeit der festgestellten Windgeschwindigkeit erfolgen. Die Windgeschwindigkeit kann dabei über ein Anemometer festgestellt werden. Vorzugsweise wird weiterhin die Außentemperatur derart berücksichtigt, dass nur bei einer Temperatur von unter 3°C ein Eisansatz erkannt wird. Fällt die von der Windenergieanlage eingespeiste Leistung gegenüber der angesichts der Windverhältnisse erwarteten Referenzleistung ab, kann insbesondere bei Temperaturen unter 3°C ein Eisansatz an den Rotorblättern vermutet werden. Alternativ oder zusätzlich kann durch Feststellen einer auftretenden Unwucht bei den genannten Temperaturen ein Eisansatz an einem der Rotorblätter vermutet werden.

Die im Falle eines erkannten Eisansatzes initial zum Betrieb der Windenergieanlage herangezogene Sonder-Kennlinie kann eine fest vorgegebene Sonder-Kennlinie sein. Es ist aber auch möglich, dass es sich bei der initialen Sonder-Kennlinie um eine, bei einem vorangegangenen Eisansatz an der Windenergieanlage mit dem erfindungsgemäßen und nachfolgend noch weiter erläuterten Verfahren optimierte Sonder-Kennlinie handelt. Sofern davon ausgegangen werden kann, dass der Eisansatz an einer bestimmten Windenergieanlage immer ähnlich erfolgt, kann durch den Rückgriff auf eine bei einem vorangegangenen Eisansatz optimierte Sonder-Kennlinie die nachfolgend beschriebene Optimierung ggf. zügiger, d.h. mit weniger Iterationen, durchgeführt werden.

Sowohl die Standard-Kennlinie als auch die Sonder-Kennlinie gibt den Blattwinkel vorzugsweise in Abhängigkeit von der Schnelllaufzahl λ der Windenergieanlage an. Bei der dimensionslosen Schnelldrehlaufzahl λ handelt es sich um das Verhältnis der Umfangsgeschwindigkeit der Rotorblätter zu der Windgeschwindigkeit und lässt sich - wenn nicht bereits aus anderen Gründen bereits berechnet - ohne Weiteres aus den von der Steuerung der Windenergieanlagen erfassten Messwerten hinsichtlich des Windes und dem Status der Windenergieanlage berechnen.

Nach Übergang des Betriebs der Windenergieanlage anhand einer initialen Sonder-Kennlinie für den Blattwinkel wird zunächst für einen vorgegebenen Zeitraum eine erste Leistungskurve aufgezeichnet. Die Leistungskurve spiegelt dabei das Verhältnis von eingespeister Leistung zur Windgeschwindigkeit wieder. Bei einem ausreichend langen Zeitraum, in dem regelmäßig mit unterschiedlichen Windgeschwindigkeiten zu rechnen ist, können genügend Datenpunkte gewonnen werden, um die Leistungskurve ausreichend genau zu ermitteln. Die Länge des Zeitraums für die Aufzeichnung der ersten Leistungskurve, aber auch der nachfolgend aufzuzeichnenden Leistungskurven kann grundsätzlich beliebig gewählt sein und auch mehrere, bspw. 3 Tage betragen. Bevorzugt ist es jedoch, wenn die Länge des fraglichen Zeitraums vorzugsweise weniger als 24 Std., vorzugsweise weniger als 12 Std., weiter vorzugsweise weniger als 6 Std. beträgt. Es ist auch möglich, dass die Aufzeichnung der ersten Leistungskurve nur für einen Zeitraum von ca. 30 Minuten, vorzugsweise von ca. 10 Minuten erfolgt. Die Anzahl der ermittelbaren Datenpunkte in einem entsprechend kurzen Zeitraum ist für die vollständige Bestimmung einer Leistungskurve zwar ggf. nicht ausreichend, sofern eine vollständige Leistungskurve überhaupt erforderlich ist, kann diese aber im Regelfall extrapoliert oder über theoretische Modelle annäherungsweise bestimmt werden.

Anschließend wird die Sonder-Kennlinie verändert. Hierzu ist es besonders bevorzugt, wenn die Sonder-Kennlinie durch einen Parameter parametrisiert ist. Eine Veränderung der Sonder-Kennlinie lässt sich dann einfach durch Veränderung des Parameters erreichen. Der Parameter kann dabei bspw. um ein fest vorgegebenes Inkrement verändert werden. Es ist aber auch möglich, dass das Inkrement in Abhängigkeit der während des Betriebs der Windenergieanlage ermittelbaren Kennzahl, insbesondere also bspw. der Schnelllaufzahl λ, verändert wird. So kann das Inkrement bspw. aus der während des Betriebs der Windenergieanlage ermittelbaren Kennzahl multipliziert mit einem konstanten Faktor gebildet werden.

Nach entsprechender Veränderung der Sonder-Kennlinie wird für einen vorgegebenen Zeitraum eine weitere Leistungskurve aufgezeichnet. Die Aufzeichnung erfolgt dabei analog zur Aufzeichnung der ersten Leistungskurve, weshalb auf die obigen Ausführungen verwiesen wird.

Anschließend wird überprüft, ob die zuletzt ermittelte weitere Leistungskurve ein Optimum darstellt. Diese Überprüfung kann anhand von Vergleichen mit den zuvor ermittelten Leistungskurven anhand der initialen Sonder-Kennlinie und/oder veränderten Sonder-Kennlinien erfolgen.

Damit der Vergleich der Leistungskurven ausreichend aussagekräftig ist, wird die Überprüfung, ob die zuletzt ermittelte weitere Leistungskurve ein Optimum darstellt, vorzugsweise nur durchgeführt, wenn die Turbulenzen im Zeitraum der Aufzeichnung dieser Leistungskurve mit der Turbulenz im Zeitraum der Aufzeichnung der vorangegangenen Leistungskurve vergleichbar ist. Falls nicht, wird die Aufzeichnung der weiteren Leistungskurve wiederholt. Die Turbulenz kann dabei bspw. über die Turbulenzintensität, also dem Verhältnis der Standardabweichung der Windgeschwindigkeit zum Mittelwert der Windgeschwindigkeit, abgebildet werden.

Alternativ ist es möglich, die ermittelten Leistungskurven auf Referenzbedingungen umzurechnen und die Überprüfung, ob die zuletzt ermittelte weitere Leistungskurve ein Optimum darstellt anhand dieser für Referenzbedingungen umgerechneten Leistungskurven erfolgt. Durch die Umrechnung der Leistungskurven auf Referenzbedingungen ist eine unmittelbare Vergleichbarkeit gegeben.

Die Überprüfung, ob die zuletzt ermittelte weitere Leistungskurve ein Optimum darstellt, kann bspw. anhand von aus den Leistungskurven und einer vorgegebenen Windverteilung ermittelbarer Erträge erfolgen. Dazu wird für eine vorgegebene Windverteilung der bei einem Betrieb mit der entsprechenden Leistungskurve zu erwartende Ertrag berechnet und als Vergleichskriterium herangezogen. Umfassen die Leistungskurven nur wenige oder gar nur jeweils einen Datenpunkt kann sich die Überprüfung - insbesondere wenn die Windgeschwindigkeiten der einzelnen Datenpunkte der einzelnen Leistungskurven vergleichbar sind - auch auf einen unmittelbaren Vergleich der erzeugten elektrischen Leistung beschränken. In diesem Fall ist nicht erforderlich zu den erfassten Datenpunkten eine Leistungskurve zu extrapolieren oder näherungsweise zu bestimmen.

Sofern festgestellt wird, dass es sich bei der zuletzt ermittelten weiteren Leistungskurve um ein Optimum handelt, wird die Windenergieanlage anhand der optimalen Sonder-Kennlinie, welche der zuletzt ermittelten weiteren Leistungskurve zugrunde liegt, betrieben. Falls noch kein Optimum erreicht wurde, wird die Sonder-Kennlinie erneut verändert und das Verfahren anschließend iterativ wiederholt.

Bei dem beschriebenen Verfahren wird die Optimierung der Sonder-Kennlinie für jedes einzelne Blatt nacheinander durchgeführt, wobei nach Ermittlung der optimalen Sonder-Kennlinie für ein Rotorblatt die oben genannten Schritte a) bis e) nacheinander für die weiteren Rotorblätter wiederholt werden. Wird bspw. aufgrund einer Unwucht vermutet, dass sich

Eisansatz an einem Rotorblatt gebildet hat und dieses Rotorblatt anhand der Unwucht identifiziert werden kann, ist bevorzugt, das Verfahren zunächst für dieses Rotorblatt durchzuführen.

Alternativ ist es möglich, über die initiale und anschließend optimierte Sonder-Kennlinie den Blattwinkel aller Rotorblätter einheitlich einzustellen. Insbesondere in diesem Fall ist es jedoch bevorzugt, dass nach einer Optimierung der gemeinsamen Sonder-Kennlinie für jedes Rotorblatt einzeln nacheinander eine Blattwinkelkorrektur durchgeführt wird.

Dazu wird zunächst die Sonder-Kennlinie für ein einzelnes Rotorblatt verändert. Der Blattwinkel dieses einen Rotorblatts wird also abweichend von der zuvor als für alle Rotorblätter gemeinsam ermittelten Sonder-Kennlinie geregelt. Die Änderung der Sonder-Kennlinie für ein einzelnes Rotorblatt kann dabei analog zur zuvor beschriebenen Änderung der Sonder-Kennlinie für alle Rotorblätter erfolgen, also insbesondere durch die Veränderung des Parameters einer parametrisierten Sonder-Kennlinie. Alternativ ist es auch möglich, dass die Veränderung der Sonder-Kennlinie für ein einzelnes Rotorblatt durch Vorgabe einer Blattwinkelabweichung erreicht wird. Der Blattwinkel des Rotorblatts wird in diesem Fall um ein konstantes Delta gegenüber der Sonder-Kennlinie für alle Rotorblätter eingestellt.

Anschließend wird wieder für einen vorgegebenen Zeitraum eine Leistungskurve ermittelt und die Sonder-Kennlinie für das einzelne Rotorblatt solange iterativ verändert, bis ein Optimum erreicht wird. Die Voraussetzungen und/oder Möglichkeiten für die Überprüfung auf das Vorliegen eines Optimums für die Sonder-Kennlinie eines einzelnen Rotorblatts gilt das hinsichtlich der Optimierung der Sonder-Kennlinie für alle Rotorblätter Gesagte analog.

Ist ein Optimum für die Sonder-Kennlinie eines einzelnen Rotorblatts gefunden, wird die blattindividuelle Optimierung nacheinander für die übrigen Rotorblätter der Windenergieanlage durchgeführt.

Nach Abschluss des beschriebenen Verfahrens kann eine Wiederholung des Verfahrens vorgesehen sein. Die Wiederholung kann durch ggf. maßgeblich veränderte Umgebungsbedingungen (bspw. Temperatur oder Luftfeuchtigkeit) ausgelöst werden oder bspw. nach einem vorgegebenen Zeitintervall erfolgen.

Zur Erläuterung der erfindungsgemäßen Windenergieanlage und des erfindungsgemäßen Computerprogrammprodukts wird auf die vorstehenden Ausführungen verwiesen.

Die Erfindung wird nun anhand einer vorteilhaften Ausführungsform unter Bezugnahme auf die beigefügten Zeichnungen beispielhaft beschrieben. Es zeigen:
- Figur 1:: eine zur Durchführung des erfindungsgemäßen Verfahrens ausgebildete Windenergieanlage; und

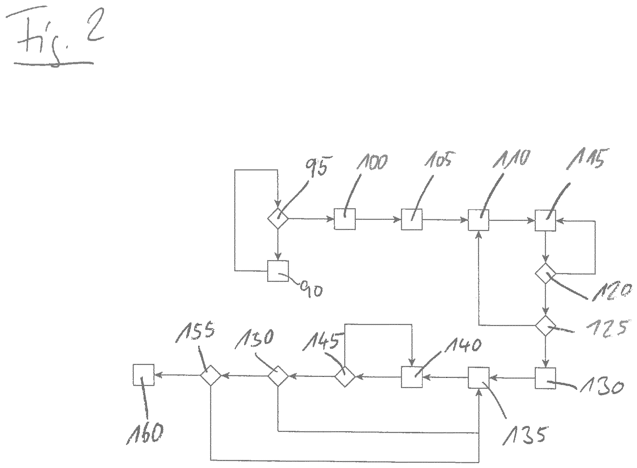

- Figur 2:: ein Ablaufdiagram einer ersten Ausführungsform des erfindungsgemäßen Verfahrens.

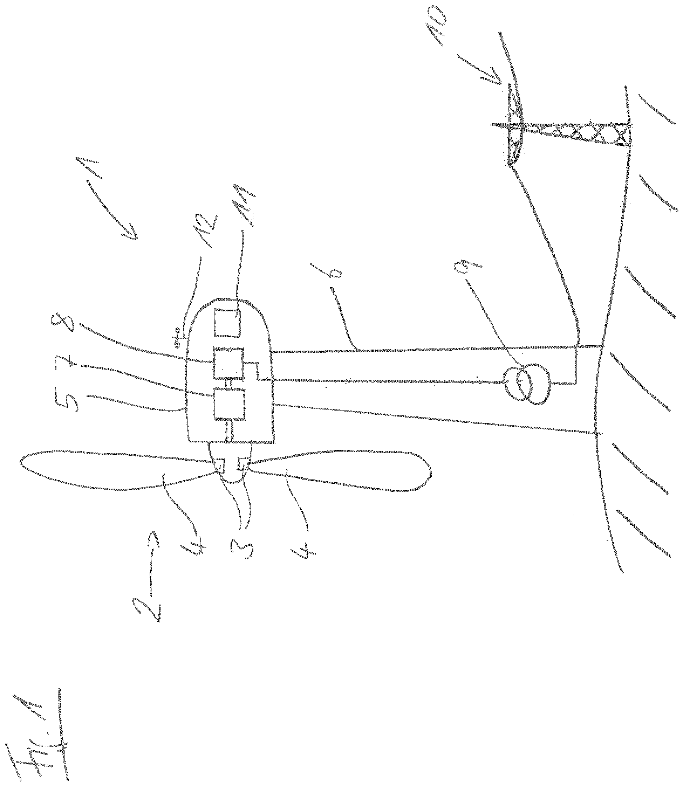

In Figur 1 ist eine Windenergieanlage 1, die zur Durchführung des erfindungsgemäßen Verfahrens ausgebildet ist, skizziert.

Die Windenergieanlage 1 umfasst einen Rotor 2 mit mehreren, im Blattwinkel über Blattverstellantriebe 3 verstellbaren Rotorblättern 4, der drehbar an einer Gondel 5 angeordnet ist. Die Gondel 5 ist wiederum drehbar auf einem Turm 6 angeordnet.

Der Rotor 2 treibt über die Rotorwelle ein Getriebe 7 an, welches auf seiner Abtriebsseite mit einem Generator 8 verbunden ist. Eine durch Wind induzierte Rotationsbewegung des Rotors 2 kann so in elektrische Energie gewandelt werden, die dann ggf. über Umrichter (nicht dargestellt) und/oder Transformatoren 9 in ein elektrisches Netz 10 eingespeist werden kann.

Die Windenergieanlage 1 umfasst weiterhin eine Regelungseinrichtung 11 die über nicht dargestellte Steuerleitungen mit den verschiedenen Komponenten der Windenergieanlage 1 verbunden ist, um diese zu steuern. Auch erfasst die Regelungseinrichtung 11, wie aus dem Stand der Technik bekannt, die Messwerte von sowohl Sensoren (nicht dargestellt) der Windenergieanlage 1, die Betriebskennzahlen wie die Rotorgeschwindigkeit erfassen, als auch von Sensoren 12 zur Erfassung der Windgeschwindigkeit und Temperatur im Bereich der Gondel. Die Regelungseinrichtung 11 ist weiterhin dazu ausgebildet, aus den erfassten Daten weitergehende Kennzahlen, wie die Schnelllaufzahl λ abzuleiten.

Unter anderem ist die Regelungseinrichtung 10 dazu ausgebildet, den Blattwinkel der Rotorblätter 4 einzustellen. Dabei ist die Regelungseinrichtung 11 zum Laufenlassen eines Computerprogrammprodukts ausgebildet, mit welchem das nachfolgend erläuterte Verfahren durchgeführt wird.

Im Normalbetrieb erfolgt die Einstellung der Blattwinkel aller Rotorblätter 4 anhand einer Standard-Kennlinie, über die für den Betrieb der Windenergieanlage der optimale Blattwinkel auf Basis der Schnelllaufzahl λ ermittelt wird (Schritt 90).

Regelmäßig wird anhand der Schnelllaufzahl λ, der gemessenen Windgeschwindigkeit im Bereich der Gondel sowie der tatsächlich eingespeisten Leistung überprüft, ob der momentane Ertrag von dem über eine Referenzleistungskurve ermittelbaren theoretischen Ertrag der Windenergieanlage abweicht (Schritt 95). Ist dies der Fall und liegt weiterhin die Temperatur im Bereich der Gondel unter 3°C wird der ansonsten anstehende Weiterbetrieb der Windenergieanlage anhand der Standard-Kennlinie abgebrochen und zu Schritt 100 des Verfahrens übergegangen. Im Stand der Technik sind ggf. noch andere, zur Erkennung eines Eisansatzes bei Windenergieanlagen geeignete Methoden bekannt, die an dieser Stelle ebenso gut zum Einsatz kommen können. Die gewählte Methode hat jedoch den Vorteil, dass die ausschließlich auf bereits aus anderen Gründen der Steuerung einer Windenergieanlage erfasste Messgrößen zurückgreift und insofern keine zusätzlichen Komponenten erfordert.

In Schritt 100 wird der Betrieb der Windenergieanlage 1 einer fest in der Regelungseinrichtung 11 hinterlegten Sonder-Kennlinie für die Blattwinkel der Rotorblätter 4 durchgeführt. Die Sonder-Kennlinie weicht von der Standard-Kennlinie ab, gibt jedoch auch einen Zusammenhang zwischen Blattwinkel und Schnelllaufzahl λ wieder. Die Sonder-Kennlinie ist dabei parametrisiert, d.h. der Verlauf der Sonder-Kennlinie lässt sich durch einen Parameter anpassen. Für die initiale Sonder-Kennlinie ist ein initialer Wert für diesen Parameter festgelegt.

Anschließend wird für einen vorgegebenen Zeitraum von 12 Stunden eine erste Leistungskurve der Windenergieanlage 1 aufgezeichnet (Schritt 105). Die Aufzeichnung einer entsprechenden Leistungskurve ist aus dem Stand der Technik bekannt.

Anschließend wird die Sonder-Kennlinie durch Veränderung ihres Parameters verändert (Schritt 110). Der Parameter wird durch ein Inkrement, welches sich aus einem Produkt der Schnelllaufzahl λ und einem konstanten Faktor ergibt verändert, wobei sich das Vorzeichen der Veränderung aus für iterative Verfahren bekannten Regeln ergibt.

Anschließend wird erneut für einen Zeitraum von 12 Stunden auf bekannte Weise eine weitere Leistungskurve der Windenergieanlage 1 aufgezeichnet (Schritt 115).

Im darauffolgenden Schritt 120 wird überprüft, ob die Turbulenzintensität während der Aufzeichnung der weiteren Leistungskurve in Schritt 115 mit der Turbulenzintensität während einer entsprechenden vorangegangenen Aufzeichnung, bspw. die Aufzeichnung der ersten Leistungskurve in Schritt 105, vergleichbar ist. Dies lässt sich anhand von durch die Regelungseinheit 11 aufgezeichneten Winddaten ermitteln. Sollte die Turbulenzintensität nicht vergleichbar sein, wird erneut eine Leistungskurve der Windenergieanlage 1 auf Basis der veränderten Sonder-Kennlinie aufgezeichnet (Schritt 115). Selbstverständlich muss hierfür nicht ein vollständig neuer 12-Stunden-Zeitraum begonnen werden. Vielmehr ist es möglich, die bereits zuvor begonnene Aufzeichnung der Leistungskurve fortzusetzen und die Ergebnisse jeweils auf die letzten 12 Stunden der Aufzeichnung zu begrenzen, bis die Turbulenzintensität in eben diesen 12 Stunden mit der Turbulenzintensität während einer entsprechenden vorangegangenen Aufzeichnung vergleichbar ist.

Entspricht die Turbulenzintensität für die zuletzt aufgezeichnete Leistungskurve den Vorgaben, wird überprüft, ob die zuletzt aufgezeichnete Leistungskurve ein Optimum darstellt. Dazu wird mit Hilfe einer vorgegebenen Windverteilung ein theoretischer Ertrag auf Basis der zuletzt aufgezeichneten Leistungskurve ermittelt und mit den entsprechenden Erträgen der zuvor aufgezeichneten Leistungskurven inkl. der ersten Leistungskurve verglichen. Ist der Ertrag der zuletzt aufgezeichneten Leistungskurve nicht optimal, wird zum Schritt 110 zurückgesprungen, wo die Sonder-Kennlinie erneut verändert wird, woraufhin die nachfolgenden Schritte 115 bis 125 wie beschrieben ausgeführt werden.

Ergibt die Prüfung in Schritt 125, dass die zuletzt ermittelte Leistungskurve ein Optimum darstellt, wird der Betrieb der Windenergieanlage auf Basis der dieser Leistungskurve zugrundeliegenden Sonder-Kennlinie fortgeführt (Schritt 130).

Die so ermittelte optimierte Sonder-Kennlinie wird zunächst für die Einstellung der Blattwinkel sämtlicher der Rotorblätter 4 der Windenergieanlage 1 verwendet, wodurch bereits ein gegenüber der initialen Sonder-Kennlinie regelmäßig höherer Ertrag durch die Windenergieanlage 1 erzielt werden kann. Um diesen Ertrag noch weiter zu optimieren, wird ausgehend von der gefundenen optimierten Sonder-Kennlinie noch eine individuelle Blattwinkelkorrektur für jedes Rotorblatt 4 einzeln durchgeführt.

Dazu wird in Schritt 135 die Sonder-Kennlinie für ein einzelnes Rotorblatt verändert, indem eine konstante Blattwinkelabweichung vorgeben wird, die auf die über die Sonder-Kennlinie eigentlich ermittelten Blattwinkel für dieses eine Rotorblatt angewendet wird. Es ist aber auch möglich, die Sonder-Kennlinie über die Anpassung der jeweiligen Parameter der parametrisierbaren Sonder-Kennlinie für eben dieses Blatt zu verändern, um so den Energieertrag zu optimieren.

Anschließend wird für einen Zeitraum von 12 Stunden eine weitere Leistungskurve aufgezeichnet (Schritt 140). Falls die Turbulenzintensität in diesem Zeitraum nicht mit der Turbulenzintensität der zuvor aufgezeichneten Leistungskurve übereinstimmt, wird die Aufzeichnung der Leistungskurve wiederholt oder fortgesetzt, bis eine auf einem Zeitraum vom 12 Stunden mit vergleichbarer Turbulenzintensität basierende Leistungskurve gefunden werden konnte (Schritt 145).

Liegt eine geeignete Leistungskurve vor, kann in Schritt 150 vergleichbar zu Schritt 125 überprüft werden, ob diese Leistungskurve ein Optimum darstellt. Ist dies nicht der Fall, wird die Sonder-Kennlinie für das fragliche Rotorblatt 4 gemäß Schritt 135 erneut verändert und die nachfolgenden Schritte wie beschrieben durchlaufen. Handelt es sich bei der ermittelten Leistungskurve um das Optimum, wird die Regelung des Blattwinkels des fraglichen Rotorblatts anhand der ermittelten individuellen Sonder-Kennlinie durchgeführt. Anschließend wird das Verfahren ab Schritt 135 für jedes Rotorblatt 4 der Windenergieanlage 1 wiederholt, bis für jedes Rotorblatt 4 eine individuelle Sonder-Kennlinie vorliegt.

Der Betrieb der Windenergieanlage 1 erfolgt dann auf Basis der für jedes Rotorblatt 4 einzeln optimierten Sonder-Kennlinien.

Bei dem vorstehend beschriebenen Ausführungsbeispiel werden die Leistungskurven jeweils über einen Zeitraum von 12 Stunden aufgezeichnet. Es ist aber auch möglich, die Aufzeichnung auf jeweils 30 oder 10 Minuten zu begrenzen. Auch wenn in einem solchen Zeitraum im Regelfall keine vollständige Leistungskurve ermittelt werden kann, können der oder die dabei erhaltene(n) Datenpunkt(e) ausreichend sein, um die Optimierung der Sonder-Kennlinie durchzuführen.

## Patentansprüche

1. Verfahren zum Betrieb einer Windenergieanlage (1) umfassend einen Rotor (2) mit mehreren, hinsichtlich des Blattwinkels einstellbaren Rotorblättern (4) und einer Erkennung für Eisansatz an den Rotorblättern (4), wobei die Blattwinkeleinstellung im Normalbetrieb anhand einer Standard-Kennlinie in Abhängigkeit einer während des Betriebs der Windenergieanlage (1) ermittelbaren Kennzahl (Schritt 90) und im Falle von erkanntem Eisansatz (Schritt 95) gemäß den folgenden Schritten erfolgt:
a) Betrieb der Windenergieanlage (1) anhand einer initialen Sonder-Kennlinie für die Blattwinkel eines Rotorblatts (4) oder aller Rotorblätter (4) in Abhängigkeit einer während des Betriebs der Windenergieanlage (1) ermittelbaren Kennzahl (Schritt 100);
b) Aufzeichnung einer ersten Leistungskurve für einen vorgegebenen Zeitraum (Schritt 105);
c) Veränderung der Sonder-Kennlinie (Schritt 110);
d) Aufzeichnung einer weiteren Leistungskurve für einen vorgegebenen Zeitraum (Schritt 115); und
e) Überprüfung, ob die zuletzt ermittelte weitere Leistungskurve ein Optimum darstellt (Schritt 125):
- wenn ja, Betrieb der Windenergieanlage (1) anhand der optimalen Sonder-Kennlinie, welche der zuletzt ermittelten weiteren Leistungskurve zugrunde liegt;
- wenn nein, Iteration ab Schritt c),
**dadurch gekennzeichnet, dass**
nach Ermittlung der optimalen Sonder-Kennlinie (Schritt 130) für ein Rotorblatt (4) die Schritte a) bis e) nacheinander für die weiteren Rotorblätter (4) wiederholt werden.

2. Verfahren nach Anspruch 1,
**dadurch gekennzeichnet, dass**
nach Ermittlung der optimalen Sonder-Kennlinie (Schritt 130) für alle Rotorblätter (4) anschließend für jedes Rotorblatt (4) einzeln nacheinander eine Blattwinkelkorrektur durchgeführt wird, mit den Schritten:
f) Veränderung der Sonder-Kennlinie für ein einzelnes Rotorblatt (Schritt 135);
g) Aufzeichnung einer weiteren Leistungskurve für einen vorgegebenen Zeitraum (Schritt 140);
h) Überprüfung, ob die zuletzt ermittelte weitere Leistungskurve ein Optimum darstellt (Schritt 150):
- wenn ja, Betrieb der Windenergieanlage (1) anhand der für das Rotorblatt optimalen Sonder-Kennlinie, welche der zuletzt ermittelten weiteren Leistungskurve zugrunde liegt;
- wenn nein, Iteration ab Schritt f).
i) Wiederholung ab Schritt f), bis für jedes Rotorblatt (4) eine optimale Sonder-Kennlinie ermittelt ist (Schritt 155).

3. Verfahren nach Anspruch 2,
**dadurch gekennzeichnet, dass**
die Veränderung der Sonder-Kennlinie für ein einzelnes Rotorblatt (4) durch Vorgabe einer Blattwinkelabweichung erreicht wird.

4. Verfahren nach einem der vorhergehenden Ansprüche,
**dadurch gekennzeichnet, dass**
die Sonder-Kennlinie durch einen Parameter parametrisiert ist und eine Veränderung der Sonder-Kennlinie durch Veränderung des Parameters erreicht werden kann.

5. Verfahren nach Anspruch 3 oder 4,
**dadurch gekennzeichnet, dass**
der Parameter und/oder die Blattwinkelabweichung um ein fest vorgegebenes Inkrement oder in Abhängigkeit der während des Betriebs der Windenergieanlage (1) ermittelbaren Kennzahl verändert wird.

6. Verfahren nach einem der vorhergehenden Ansprüche,
**dadurch gekennzeichnet, dass**
die Überprüfung, ob die zuletzt ermittelte weitere Leistungskurve ein Optimum darstellt, nur durchgeführt wird, wenn die Turbulenzen im Zeitraum der Aufzeichnung dieser Leistungskurve mit der Turbulenz im Zeitraum der Aufzeichnung der vorangegangenen Leistungskurve vergleichbar ist und, falls nicht, die weitere Leistungskurve erneut gemäß Schritt d) für einen vorgegebenen Zeitraum aufgezeichnet wird (Schritte 120 und 145).

7. Verfahren nach einem der vorhergehenden Ansprüche,
**dadurch gekennzeichnet, dass**
die Überprüfung, ob die zuletzt ermittelte weitere Leistungskurve ein Optimum darstellt, anhand von für Referenzbedingungen umgerechneten Leistungskurven oder anhand von aus den Leistungskurven und einer vorgegebenen Windverteilung ermittelbarer Erträge erfolgt.

8. Verfahren nach einem der vorhergehenden Ansprüche,
**dadurch gekennzeichnet, dass**
die initialen Sonder-Kennlinie eine vorgegebene Sonder-Kennlinie oder die bei einem vorhergehenden Eisansatz als optimale Kennlinie ermittelte Sonder-Kennlinie ist.

9. Verfahren nach einem der vorhergehenden Ansprüche,
**dadurch gekennzeichnet, dass**
die während des Betriebs der Windenergieanlage ermittelbaren Kennzahl die Schnelllaufzahl λ ist.

10. Verfahren nach einem der vorhergehenden Ansprüche,
**dadurch gekennzeichnet, dass**
der vorgegebene Zeitraum für die Aufzeichnung von Leistungskurven 24 Std. oder weniger, vorzugsweise 12 Std. oder weniger, weiter vorzugsweise 6 Std. oder weniger, weiter vorzugsweise 30 Minuten oder weniger, weiter vorzugsweise ca. 10 Minuten beträgt.

11. Verfahren nach einem der vorhergehenden Ansprüche,
**dadurch gekennzeichnet, dass**
die Erkennung von Eisansatz durch Feststellung eines Leistungsdefizits der Windenergieanlage (1) gegenüber einer Referenzleistungskurve in Abhängigkeit der festgestellten Windgeschwindigkeit erfolgt, wobei vorzugsweise die Außentemperatur derart berücksichtigt wird, dass nur bei einer Temperatur von unter 3°C auf Eisansatz erkannt wird.

12. Windenergieanlage (1) umfassend einen Rotor (2) mit mehreren, hinsichtlich des Blattwinkels einstellbaren Rotorblättern (4), der drehbar an einer drehbar auf einem Turm (6) angeordneten Gondel (5) angeordnet und mit einem in der Gondel (5) angeordneten Generator (8) zur Umwandlung von auf den Rotor (2) einwirkenden Windenergie in elektrische Energie verbunden ist, und eine Steuerungseinrichtung (11) zur Steuerung der Windenergieanlage (1) und deren Komponenten,
**dadurch gekennzeichnet, dass**
die Steuerungseinrichtung (11) zur Durchführung des Verfahrens nach einem der vorhergehenden Ansprüche ausgebildet ist.

13. Windenergieanlage nach Anspruch 12,
**dadurch gekennzeichnet, dass**
die Windenergieanlage (1) ein Anemometer und/oder einen Temperatursensor zur Messung der Windgeschwindigkeit und/oder der Temperatur im Bereich der Gondel (5) aufweist.

14. Computerprogrammprodukt umfassend Programmteile, welche, wenn geladen in einem Computer, zur Durchführung eines Verfahrens nach einem der Ansprüche 1 bis 11 ausgelegt sind.

## Claims

1. Method for operating a wind turbine (1) comprising a rotor (2) which has multiple rotor blades (4) which are settable with respect to blade angle and has a means for detection of formation of ice on the rotor blades (4), wherein the blade-angle setting is realized during normal operation on the basis of a standard characteristic curve in a manner dependent on a characteristic number that can be ascertained during the operation of the wind turbine (1) (step 90), and is realized in the case where formation of ice is detected (step 95) according to the following steps:
a) operating the wind turbine (1) on the basis of an initial special characteristic curve for the blade angles of a rotor blade (4) or of all the rotor blades (4) in a manner dependent on a characteristic number that can be ascertained during the operation of the wind turbine (1) (step 100);
b) recording a first power curve for a specified period of time (step 105);
c) changing the special characteristic curve (step 110);
d) recording a further power curve for a specified period of time (step 115); and
e) checking whether the last ascertained further power curve represents an optimum (step 125):
- if so, operating the wind turbine (1) on the basis of the optimum special characteristic curve on which the last ascertained further power curve is based;
- if not, iterating from step c),
**characterized in that**,
after ascertaining the optimum special characteristic curve (step 130) for one rotor blade (4), steps a) to e) are repeated one after the other for the further rotor blades (4).

2. Method according to Claim 1,
**characterized in that**,
after ascertaining the optimum special characteristic curve (step 130) for all the rotor blades (4), blade angle correction is subsequently carried out for each rotor blade (4) individually one after the other, with the steps of:
f) changing the special characteristic curve for an individual rotor blade (step 135);
g) recording a further power curve for a predefined period of time (step 140);
h) checking whether the last ascertained further power curve represents an optimum (step 150):
- if so, operating the wind turbine (1) on the basis of the optimum special characteristic curve for the rotor blade on which the last ascertained further power curve is based;
- if not, iterating from step f),
i) repeating from step f) until an optimum special characteristic curve has been ascertained for each rotor blade (4) (step 155).

3. Method according to Claim 2,
**characterized in that**
the changing of the special characteristic curve for an individual rotor blade (4) is achieved by specifying a blade-angle deviation.

4. Method according to one of the preceding claims,
**characterized in that**
the special characteristic curve is parameterized by a parameter, and changing of the special characteristic curve can be achieved by changing the parameter.

5. Method according to Claim 3 or 4,
**characterized in that**
the parameter and/or the blade-angle deviation are/is changed by a fixedly specified increment or in a manner dependent on the characteristic number that can be ascertained during the operation of the wind turbine (1).

6. Method according to one of the preceding claims,
**characterized in that**
the check as to whether the last ascertained further power curve represents an optimum is carried out only if the turbulence during the period of time of the recording of this power curve is comparable with the turbulence during the period of time of the recording of the previous power curve, and if not comparable, the further power curve is recorded once again for a specified period of time according to step d) (steps 120 and 145).

7. Method according to one of the preceding claims,
**characterized in that**
the check as to whether the last ascertained further power curve represents an optimum is made on the basis of power curves converted for reference conditions or on the basis of yields that can be ascertained from the power curves and a specified wind distribution.

8. Method according to one of the preceding claims,
**characterized in that**
the initial special characteristic curve is a specified special characteristic curve or is the special characteristic curve ascertained to be the optimum characteristic curve during a previous case in which there was formation of ice.

9. Method according to one of the preceding claims,
**characterized in that**
the characteristic number that can be ascertained during the operation of the wind turbine is the tip speed ratio λ.

10. Method according to one of the preceding claims,
**characterized in that**
the specified period of time for the recording of power curves is 24 hours or less, preferably 12 hours or less, more preferably 6 hours or less, more preferably 30 minutes or less, more preferably approximately 10 minutes.

11. Method according to one of the preceding claims,
**characterized in that**
the detection of formation of ice is realized by establishing a power deficit of the wind turbine (1) in relation to a reference power curve in a manner dependent on the established wind speed, wherein preferably the outside temperature is taken into account such that formation of ice is detected only at a temperature of below 3°C.

12. Wind turbine (1) comprising a rotor (2) which has multiple rotor blades (4) which are settable with respect to blade angle, said rotor being arranged rotatably on a nacelle (5), which is arranged rotatably on a tower (6), and being connected to a generator (8), which is arranged in the nacelle (5) and serves for converting wind energy acting on the rotor (2) into electrical energy, and comprising a control device (11) which serves for controlling the wind turbine (1) and the components thereof, **characterized in that**
the control device (11) is configured for carrying out the method according to one of the preceding claims.

13. Wind turbine according to Claim 12,
**characterized in that**
the wind turbine (1) has an anemometer and/or a temperature sensor for measuring the wind speed and/or the temperature in the region of the nacelle (5).

14. Computer program product comprising program parts which, when loaded in a computer, are configured for carrying out a method according to one of Claims 1 to 11.

## Revendications

1. Procédé permettant de faire fonctionner une éolienne (1) comprenant un rotor (2) pourvu de plusieurs pales de rotor (4) à angle de pale réglable, et d'un dispositif d'identification de formation de givre sur les pales de rotor (4), dans lequel, en fonctionnement normal, le réglage de l'angle de pale est effectué à l'aide d'une courbe caractéristique standard en fonction d'un indicateur pouvant être établi (étape 90) pendant le fonctionnement de l'éolienne (1), et si une formation de givre est identifiée (étape 95), selon les étapes suivantes consistant à :
a) faire fonctionner l'éolienne (1) à l'aide d'une courbe caractéristique spéciale initiale pour les angles de pale d'une pale de rotor (4) ou de toutes les pales de rotor (4) en fonction d'un indicateur pouvant être établi (étape 100) pendant le fonctionnement de l'éolienne (1) ;
b) enregistrer une première courbe de performance pour une période prédéfinie (étape 105) ;
c) modifier la courbe caractéristique spéciale (étape 110) ;
d) enregistrer une autre courbe de performance pour une période prédéfinie (étape 115) ; et
e) vérifier si l'autre courbe de performance établie en dernier est optimale (étape 125) :
- si oui, faire fonctionner l'éolienne (1) à l'aide de la courbe caractéristique spéciale optimale qui est à la base de l'autre courbe de performance établie en dernier ;
- si non, itérer à partir de l'étape c),
**caractérisé en ce qu'**après établissement de la courbe caractéristique spéciale optimale (étape 130) pour une pale de rotor (4), les étapes a) à e) sont répétées les unes après les autres pour les autres pales de rotor (4).

2. Procédé selon la revendication 1, **caractérisé en ce qu'**après établissement de la courbe caractéristique spéciale optimale (étape 130) pour toutes les pales de rotor (4), ensuite une correction d'angle de pale est effectuée successivement individuellement pour chaque pale de rotor (4), comprenant les étapes consistant à :
f) modifier la courbe caractéristique spéciale pour une pale de rotor individuelle (étape 135) ;
g) enregistrer une autre courbe de performance pour une période prédéfinie (étape 140) ;
h) vérifier si l'autre courbe de performance établie en dernier est optimale (étape 150) :
- si oui, faire fonctionner l'éolienne (1) à l'aide de la courbe caractéristique spéciale optimale pour la pale de rotor qui est à la base de l'autre courbe de performance établie en dernier ;
- si non, itérer à partir de l'étape f),
i) répéter à partir de l'étape f) jusqu'à ce qu'une courbe caractéristique spéciale optimale soit établie pour chaque pale de rotor (4) (étape 155).

3. Procédé selon la revendication 2, **caractérisé en ce que** la modification de la courbe caractéristique spéciale pour une pale de rotor individuelle (4) est obtenue par la spécification d'un écart d'angle de pale.

4. Procédé selon l'une quelconque des revendications précédentes, **caractérisé en ce que** la courbe caractéristique spéciale est paramétrée par un paramètre, et une modification de la courbe caractéristique spéciale peut être obtenue par une modification du paramètre.

5. Procédé selon la revendication 3 ou 4, **caractérisé en ce que** le paramètre et/ou l'écart d'angle de pale est/sont modifié(s) par un incrément fixe ou en fonction de l'indicateur pouvant être établi pendant le fonctionnement de l'éolienne (1).

6. Procédé selon l'une quelconque des revendications précédentes, **caractérisé en ce que** la vérification si l'autre courbe de performance établie en dernier est optimale n'est effectuée que si les turbulences pendant la période de l'enregistrement de cette courbe de performance sont comparables avec la turbulence pendant la période de l'enregistrement de la courbe de performance précédente, et sinon l'autre courbe de performance est réenregistrée selon l'étape d) pour une période prédéfinie (étapes 120 et 145).

7. Procédé selon l'une quelconque des revendications précédentes, **caractérisé en ce que** la vérification si l'autre courbe de performance établie en dernier est optimale est effectuée à l'aide de courbes de performance converties pour des conditions de référence ou à l'aide de rendements pouvant être établis à partir des courbes de performance et d'une distribution de vent prédéfinie.

8. Procédé selon l'une quelconque des revendications précédentes, **caractérisé en ce que** la courbe caractéristique spéciale initiale est une courbe caractéristique spéciale prédéfinie ou la courbe caractéristique spéciale établie comme courbe caractéristique optimale lors d'une formation de givre précédente.

9. Procédé selon l'une quelconque des revendications précédentes, **caractérisé en ce que** l'indicateur pouvant être établi pendant le fonctionnement de l'éolienne est la vitesse spécifique À.

10. Procédé selon l'une quelconque des revendications précédentes, **caractérisé en ce que** la période prédéfinie pour l'enregistrement de courbes de performance est de 24 heures ou moins, de préférence de 12 heures ou moins, de plus grande préférence de 6 heures ou moins, de plus grande préférence de 30 minutes ou moins, de plus grande préférence d'environ 10 minutes.

11. Procédé selon l'une quelconque des revendications précédentes, **caractérisé en ce que** l'identification d'une formation de givre est effectuée en constatant une insuffisance de performance de l'éolienne (1) par rapport à une courbe de performance de référence en fonction de la vitesse du vent constatée,
dans lequel de préférence la température extérieure est prise en compte de telle sorte que l'identification d'une formation de givre n'intervient qu'à une température inférieure à 3 °C.

12. Eolienne (1), comprenant un rotor (2) pourvu de plusieurs pales de rotor (4) à réglage d'angle de pale, qui est disposé en rotation sur une nacelle (5) disposée en rotation sur une tour (6) et d'un générateur (8) disposé dans la nacelle (5) et servant à convertir l'énergie du vent agissant sur le rotor (2) en énergie électrique, et un dispositif de commande (11) pour commander l'éolienne (1) et ses composants,
**caractérisée en ce que** le dispositif de commande (11) est réalisé pour exécuter le procédé selon l'une quelconque des revendications précédentes.

13. Eolienne selon la revendication 12, **caractérisée en ce que** l'éolienne (1) présente un anémomètre et/ou un capteur de température pour mesurer la vitesse du vent et/ou la température au niveau de la nacelle (5).

14. Produit de programme informatique, comprenant des parties de programme qui, lorsqu'elles sont chargées sur un ordinateur, sont conçues pour exécuter un procédé selon l'une quelconque des revendications 1 à 11.
